# EUROPÄISCHE PATENTSCHRIFT

(11) **EP 2 956 325 B1**
(45) Veröffentlichungstag und Bekanntmachung des Hinweises auf die Patenterteilung: **06.11.2019**
(21) Anmeldenummer: 14701717.2
(22) Anmeldetag: 23.01.2014
(51) Int. Cl.: B60K 6/48, B60K 6/365, B60K 6/547, B60W 10/02, B60W 10/06, B60W 10/08, B60W 20/00, B60W 10/11, B60W 10/115, B60W 30/188

(54) **DREHMOMENTÜBERLAGERUNGSEINRICHTUNG FÜR HYBRIDANTRIEB SOWIE VERFAHREN ZUM BETREIBEN EINES DERARTIGEN HYBRIDANTRIEBS**
TORQUE OVERLAY DEVICE FOR A HYBRID DRIVE SYSTEM, AND A METHOD FOR OPERATING SUCH A HYBRID DRIVE SYSTEM
DISPOSITIF DE SUPERPOSITION DE COUPLES POUR MOTORISATION HYBRIDE ET PROCÉDÉ DE FONCTIONNEMENT D'UNE TELLE MOTORISATION HYBRIDE

(30) Priorität: 06.02.2013 DE 102013201946; 25.06.2013 DE 102013211975
(43) Veröffentlichungstag der Anmeldung: 23.12.2015
(73) Patentinhaber: Bayerische Motoren Werke Aktiengesellschaft, 80809 München (DE)
(72) Erfinder: HOESS, Bernhard, 80995 Muenchen (DE); HUBER, Robert, 84030 Landshut (DE); ROGGE, Simon, 82205 Gilching (DE); PRIGNITZ, Falk, 85253 Erdweg (DE)
(86) Internationale Anmeldenummer: PCT/EP2014/051311
(87) Internationale Veröffentlichungsnummer: WO 2014/122026

(56) Entgegenhaltungen:
- EP-A1- 2 463 171
- WO-A1-2012/073651
- WO-A1-2012/131259
- AT-A2- 500 696
- DE-A1-102008 029 287
- DE-A1-102008 035 451
- DE-A1-102010 063 092

## Beschreibung

Die vorliegende Erfindung betrifft eine Drehmomentüberlagerungseinrichtung für einen Hybridantrieb gemäß den Merkmalen des Patentanspruchs 1 sowie ein Verfahren zum Betreiben des Hybridantriebs mit erfindungsgemäßer Drehmomentüberlagerungseinrichtung. Der Hybridantrieb ist insbesondere für die Verwendung in einem Personenkraftwagen geeignet.

Hybridantriebe sind im Stand der Technik zahlreich bekannt. Zumeist ist in einer sogenannten Hybrid-Parallelarchitektur ein Elektromotor so angeordnet, dass das Antriebsmoment des Elektromotors der Abtriebswelle des Verbrennungsmotors zugeschaltet werden kann. Das Summenmoment aus Verbrennungsmotor und Elektromotor wird anschließend durch das Getriebe und danach an die angetriebene Abtriebswelle des Fahrzeugs geleitet. Im Rekuperationsfall verläuft der Momentenfluss mit umgekehrtem Vorzeichen. Aufgrund der Kopplung Elektromotor und Verbrennungsmotor vor dem Getriebe werden beide Antriebsaggregate, der Verbrennungsmotor sowie der Elektromotor, jeweils in demselben Gang betrieben. Bei den aktuell am Markt befindlichen Hybridfahrzeugen orientiert sich die Gangwahl in der Regel an dem sich jeweils ergebenden Betriebspunkt des Verbrennungsmotors. Der Elektromotor wird dabei oftmals in einem nicht optimalen Betriebspunkt betrieben. Hieraus ergeben sich entweder leistungsseitig oder energetisch Nachteile.

Weitere Ansätze sehen eine Leistungsverzweigung des Antriebsmoments vor. Hierfür sind zwei Elektromotoren erforderlich, von denen ein Elektromotor generatorisch und der andere motorisch betrieben werden. Durch die Leistungsverzweigung entstehen energetische Verluste.

Die Vor- und Nachteile dieser Hybridarchitekturen sind im Stand der Technik bekannt.

Die EP 2 463 171 A1 zeigt einen Hybridantrieb mit einer Drehmomentüberlagerungseinrichtung, die zwei schaltbare Stirnradstufen und einen schaltbaren Planetenradsatz enthält.

Ein weiterer Ansatz ist in der DE 10 2010 063 092 A1 beschrieben. Hier ist ein Hybridantrieb mit einer Drehmomentüberlagerungseinrichtung beschrieben, die eine erste, dem Elektromotor zugeordnete Übersetzungseinrichtung und eine zweite, dem Verbrennungsmotor zugeordnete Übersetzungseinrichtung umfasst. Jede Übersetzungseinrichtung umfasst mindestens zwei alternativ anwählbare Übersetzungsstufen. Die Momente des Elektromotors und des Verbrennungsmotors werden nach den beiden Übersetzungseinrichtungen abtriebsseitig summiert und über den Drehmomentausgang der Drehmomentüberlagerungseinrichtung dem Differential des Fahrzeugs zugeführt. Im Rekuperationsfall verläuft der Momentenfluss mit umgekehrtem Vorzeichen. Diese Topologie ermöglicht, dass die Antriebsaggregate getrennt voneinander geschaltet werden können. Allerdings ist diese Topologie insbesondere bei Anforderung von Summenleistungen während der jeweiligen Schaltvorgänge mit Blick auf die Zugkraft bzw. Zugkraftentfaltung bzw. Zugkraftkontinuität noch nicht optimal. Zudem ist diese Topologie bauraumseitig aufwändig.

Aufgabe der Erfindung ist es, eine Drehmomentüberlagerungseinrichtung zu schaffen, die den oben beschriebenen Nachteilen besser Rechnung trägt. Insbesondere soll eine Drehmomentüberlagerungseinrichtung geschaffen werden, die einen Betrieb sowohl des Verbrennungsmotors als auch des Elektromotors in ihrem jeweils optimalen Betriebspunkt ermöglicht. Ferner soll die Drehmomentüberlagerungseinrichtung so ausgestaltet sein, dass die aus dem Stand bekannten leistungsseitigen bzw. energetischen Nachteile behoben sind, insbesondere unnötige energetische Verluste vermieden werden. Außerdem soll die Drehmomentübertragungseinrichtung hinsichtlich des benötigten Bauraums optimiert sein. Insbesondere soll auch ein Verfahren zum Betreiben eines solchen Hybridantriebs mit erfindungsgemäßer Drehmomentüberlagerungseinrichtung mit hoher energetischer Effizienz zur Verfügung gestellt werden.

Diese Aufgabe wird erfindungsgemäß durch die Drehmomentüberlagerungseinrichtung gemäß Anspruch 1 sowie durch das Verfahren gemäß dem unabhängigen Verfahrensanspruch 11 gelöst. Weitere vorteilhafte Ausgestaltungen der Erfindung finden sich in den Unteransprüchen.

Die erfindungsgemäße Drehmomentüberlagerungseinrichtung dient vor allem zur Verwendung in einem Hybridantrieb für Kraftfahrzeuge, insbesondere zum Einsatz in Personenkraftfahrzeugen. Der Hybridantrieb umfasst hierzu einen Verbrennungsmotor, einen Elektromotor und die erfindungsgemäß ausgebildete Drehmomentüberlagerungseinrichtung, wobei mittels der Drehmomentüberlagerungseinrichtung ein Drehmoment des Verbrennungsmotors mit einem Drehmoment des Elektromotors überlagerbar ist. Die Drehmomentüberlagerungseinrichtung ist ferner ausgangsseitig mit einem Abtrieb des Fahrzeugs verbunden.

Die erfindungsgemäß ausgeführte Drehmomentüberlagerungseinrichtung weist einen ersten und einen zweiten Drehmomenteingang, einen Drehmomentausgang sowie eine erste Übersetzungseinrichtung und eine zweite Übersetzungseinrichtung auf. Der Elektromotor ist mit dem ersten Drehmomenteingang drehmomentfest koppelbar, der Verbrennungsmotor ist mit dem zweiten Drehmomenteingang drehmomentfest koppelbar. Der erste Drehmomenteingang ist mit der ersten Übersetzungseinrichtung, der zweite Drehmomenteingang mit der zweiten Übersetzungseinrichtung drehmomentfest verbunden. Die Übersetzungseinrichtungen sind jeweils abtriebsseitig mit dem Drehmomentausgang der Drehmomentüberlagerungseinrichtung drehmomentfest gekoppelt.

Ein hervorzuhebender Gedanke der Erfindung ist es also, dass im Prinzip somit jedem Antriebsaggregat - Elektromotor und Verbrennungsmotor - eine eigene Übersetzungseinrichtung zur Verfügung steht. Erst am Ausgang der Übersetzungseinrichtungen kommt es zur Summierung der Antriebsmomente der Antriebsaggregate. Diese abtriebsseitige Summierung der Antriebsmomente in positiver Momentenflussrichtung nach den jeweiligen Übersetzungseinrichtungen ist ein sehr wesentlicher funktionaler Unterschied zu den aus dem Stand der Technik bekannten Hybridgetrieben, bei denen die Summation üblicherweise vor der Übersetzungseinrichtung stattfindet. Die abtriebsseitige Summierung ermöglicht, die jeweils geschalteten Übersetzungsstufen der Aggregate unabhängig voneinander und somit aggregateoptimiert wählen zu können.

Beide Übersetzungseinrichtungen umfassen jeweils mindestens zwei alternativ anwählbare Übersetzungsstufen.

Erfindungsgemäß umfasst die erste Übersetzungseinrichtung zur Darstellung der mindestens zwei alternativ anwählbaren Übersetzungsstufen wenigstens einen Planetenradsatz, während die zweite Übersetzungseinrichtung wenigstens zwei Stirnradsätze umfasst.

Es zeigte sich, dass durch die Kombination eines Planetenradsatzes auf Seiten der ersten Übersetzungseinrichtung mit wenigstens einem Stirnradsatz auf Seiten der zweiten Übersetzungseinrichtung bauraumseitig sehr günstige Ausführungen der Drehmomentüberlagerungseinrichtung gefunden bzw. realisiert werden können. Ferner lassen sich die zwei alternativ anwählbaren Übersetzungsstufen der ersten Übersetzungseinrichtung wirkungsgradseitig sehr günstig darstellen, da ein Planetenradsatz hierfür günstige Verhältnisse liefert. Hierdurch ist die Durchleitung des elektromotorischen Moments vom Elektromotor zum Abtrieb wirkungsgradoptimal darstellbar, was zu einer Steigerung der elektrischen Reichweite des mit der erfindungsgemäß ausgeführten Drehmomentüberlagerungseinrichtung ausgestatteten Fahrzeugs führt. Aufgrund der vergleichsweise geringen Energiespeicherdichten von elektrischen Speichern, bspw. den bekannten Li-Ionen-Speichern, ist eine hohe Effizienz im elektrischen Pfad von Hybridantrieben besonders vorteilhaft. Es zeigte sich, dass es vorteilhaft ist, die erste Übersetzungsstufe der ersten Übersetzungseinrichtung als ersten elektromotorischen Gang fahrleistungsorientiert so auszulegen, dass eine gewünscht hohe Anfahrbeschleunigung elektromotorisch darstellbar ist, während die zweite Übersetzungsstufe der ersten Übersetzungseinrichtung als zweiter elektromotorischer Gang vorteilhaft so auszulegen ist, dass die Höchstgeschwindigkeit des Fahrzeugs elektromotorisch darstellbar ist. Je nach Elektromotor kann es auch vorteilhaft sein, für den zweiten elektromotorischen Gang auch eine längere Auslegung zu wählen, um zusätzlich Effizienzpotentiale über optimierte Betriebspunkte des Elektromotors zu erschließen.

Bei dem Planetenradsatz kann es sich sowohl um einen Einfach-Planetenradsatz als auch um einen erweiterten Planetenradsatz wie beispielsweise einen Ravigneaux-Planetenradsatz handeln.

Erfindungsgemäß umfassen beide Übersetzungseinrichtungen jeweils mindestens zwei alternativ anwählbare Übersetzungsstufen. Die zweite Übersetzungsstufe der zweiten Übersetzungseinrichtung kann dann zweckmäßig als Effizienzgang ausgeführt werden, d.h. mit einer längeren Übersetzung als die erste Übersetzungsstufe der zweiten Übersetzungseinrichtung. Dies führt zu einer höheren Effizienz des Hybridantriebs bei verbrennungsmotorischem Betrieb.

Gemäß einer weiteren Fortbildung der Erfindung kann es aber auch von Vorteil sein, die zweite Übersetzungsstufe der zweiten Übersetzungseinrichtung mit einer kürzeren Übersetzung auszuführen als die erste Übersetzungsstufe der zweiten Übersetzungseinrichtung entweder im Sinne eines Fahrgangs oder sogar eines Anfahrgangs.

Erfindungsgemäß umfasst die zweite Übersetzungseinrichtung zur Darstellung der mindestens zwei alternativ anwählbaren Übersetzungsstufen hierzu wenigstens zwei Stirnradsätze, die in einer bevorzugten Ausgestaltung der Erfindung auf einer mit dem zweiten Drehmomenteneingang verbundenen Eingangswelle hintereinander angeordnet sind. Schaltelemente zur Anwählbarkeit der Übersetzungsstufe können somit innerhalb der zweiten Übersetzungseinrichtung einheitlich ausgeführt werden.

Gemäß einer besonders vorteilhaften Ausgestaltung der Erfindung umfasst die erste Übersetzungseinrichtung genau einen Planetenradsatz, wobei vorzugsweise genau zwei Übersetzungsstufen alternativ anwählbar sind. Es zeigte sich, dass zwei Übersetzungsstufen üblicherweise ausreichend sind, um den Betriebspunkt des Elektromotors in dem erfindungsgemäß ausgebildeten Hybridantrieb sowohl unter dem Aspekt optimaler Fahrleistung als auch unter dem Aspekt hoher Effizienz unter allen Fahrbedingungen aggregatespezifisch anwählen zu können. Gleichzeitig ist der Bauraumbedarf für nur einen Planetenradsatz der ersten Übersetzungseinrichtung sehr gering, so dass die gesamte Drehmomentüberlagerungseinrichtung sehr kompakt ausgeführt werden kann. Dies ist insbesondere für eine Integration des Hybridantriebs in Kleinwagen mit sehr beschränktem Bauraum bei üblicherweise querangeordneten Antriebsaggregaten besonders vorteilhaft.

Es ist von Vorteil, den Planetenradsatz zur Anwahl der Übersetzungsstufen zweckmäßig mit mindestens einer lastschaltfähigen Reibbremse und/oder Reibkupplung auszuführen. So kann beispielsweise die Sonne des Planetenradsatzes mit einer Reibbremse oder Reibkupplung gegenüber dem Gehäuse bremsbar ausgeführt sein, so dass bei gebremster Sonne die Bewegung von Planetenträger zu Hohlrad eine Übersetzungsstufe bilden. Aufgrund der Lastschaltbarkeit von Reibbremsen und/oder Reibkupplungen sind sehr komfortable und schnelle Schaltabläufe ohne Zugkraftunterbrechung darstellbar.

Im Rahmen der Erfindung ist der Planetenradsatz zur Darstellung einer der Übersetzungsstufen der mindestens zwei alternativ anwählbaren Übersetzungsstufen verblockbar. Bei verblocktem Planetenradsatz läuft der gesamte Radsatz im Block um, wodurch es zu keinen Verzahnungsverlusten innerhalb des Planetenradsatzes mehr kommt. Dies ist wirkungsgradseitig sehr erwünscht. Entsprechend ist als verblockbare Übersetzungsstufe diejenige zu wählen, die im Betrieb des Fahrzeugs mit höchstem Energiedurchsatz im Fahrbetrieb eingelegt ist. Es zeigte sich, dass dies zumeist die zweite, längere Übersetzungsstufe ist. Je nach Auslegung kann aber auch die erste Übersetzungsstufe mittels verblockbarem Planetenradsatz dargestellt werden.

Im Rahmen der Erfindung ist zur Darstellung einer weiteren Übersetzungsstufe der mindestens zwei alternativ anwählbaren Übersetzungsstufen die Elektromaschine mit einem Hohlrad des Planetenradsatzes drehmomentfest koppelbar, eine Sonne des Planetenradsatzes mittels der lastschaltfähigen Reibbremse mit einem Gehäuse der Drehmomentüberlagerungseinrichtung koppelbar und vorzugsweise ein Planetenträger des Planetenradsatzes mit dem Drehmomentausgang drehmomentfest gekoppelt. Bei entsprechend ausgelegter Standübersetzung des Planetenradsatzes können mittels einer solchen Verschaltung des Planetenradsatzes sich durch Verbremsen der Sonne gegenüber dem Gehäuse Übersetzungsverhältnisse von bis zu 2 in sehr kompakter Bauweise bei hoher Momentenbelastbarkeit dargestellt werden.

Gemäß einer bevorzugten Ausgestaltung der Erfindung umfasst die zweite Übersetzungseinrichtung zur Anwählbarkeit wenigstens eines der Stirnradsätze zweckmäßig wenigstens eine form-und/oder reibschlüssige Schaltkupplung. Vorteilhaft sind alle Übersetzungsstufen mit form- und/oder reibschlüssigen Schaltkupplungen ausgeführt. Als formschlüssige Schaltkupplungen kommen beispielsweise Klauenkupplungen in Frage. Klauenkupplungen sind in der Regel nicht lastschaltbar, so dass eine solche Schaltung von einer verbrennungsmotorischen Übersetzungsstufe bzw. Gang der zweiten Übersetzungseinrichtung in eine andere verbrennungsmotorische Übersetzungsstufe bzw. Gang entweder elektromotorisch gestützt erfolgen muss oder sich abtriebsseitig eine Zugkraftreduktion während des Schaltvorgangs ergibt. Bei kleinen verbrennungsmotorischen Leistungen im Verhältnis zu der elektromotorischen Leistung wird dies wenig relevant sein, bei höheren verbrennungsmotorischen Leistungen hingegen kann dies vom Fahrer als störend empfunden werden, insbesondere bei mit Summenleistung ausgeführten Volllastmanövern. In diesen Fällen sind technisch aufwändigere reibschlüssige Schaltkupplung vorzusehen, die eine Momentenüberschneidung während des Schaltvorgangs von einer Übersetzungsstufe auf die andere ermöglichen.

In vielen Fällen ist es von Vorteil, wenn die wenigstens eine Schaltkupplung mit einem Synchronisierelement ausgeführt. Geeignete Synchronsierelemente, bspw. Einfach- bis Dreifach-Synchros, sind im Stand der Technik bekannt. Mittels Synchronisierelementen können Differenzdrehzahlen zwischen Welle und zu schaltendem Zahnrad in kurzer Zeitdauer passiv, d.h. ohne aktiven Motoreingriff, soweit reduziert werden, dass der Schaltvorgang durch bspw. ein Einfahren der Klauenkupplungen abgeschlossen werden kann. Vorteilhaft sind alle Schaltkupplungen mit Synchronsierelementen ausgeführt.

Erfindungsgemäß i ist zwischen dem Elektromotor und dem Planetenradsatz eine feste Übersetzung angeordnet, und zwar ein Stirnradsatz mit einem ersten, dem Elektromotor zugewandten Stirnrad und einem zweiten, dem Planetenradsatz zugewandten Stirnrad. Die feste Übersetzung weist vorzugsweise ein Übersetzungsverhältnis zwischen 1,5 und 4, besonders bevorzugt ein Übersetzungsverhältnis zwischen 1,5 und 3, ganz besonders bevorzugt ein Übersetzungsverhältnis von 1,5 bis 2 auf. Hierdurch lässt sich eine Vorübersetzung der elektromotorischen Drehzahl bewerkstelligen, so dass der Planetenradsatz deutlich niedrigere Drehzahlen sieht. Dies ist insbesondere bei hochdrehenden Elektromotoren von Vorteil, weil so die im Planetenradsatz drehzahlabhängigen Verluste in Lagern oder Zahneingriffen reduziert werden.

Besonders vorteilhaft ist zur Darstellung einer oder zweier weiterer alternativ anwählbarer Übersetzungsstufen eine mit dem zweiten Drehmomenteingang verbundene Welle der zweiten Übersetzungseinrichtung mit dem ersten Stirnrad der als Stirnradsatz ausgebildeten festen Übersetzung alternativ anwählbar drehmomentfest verbindbar. Dies stellt quasi eine "Mitnutzung" der in der Drehmomentüberlagerungseinrichtung vorhandenen elektromotorischen Übersetzungsstufen als verbrennungsmotorische Übersetzungsstufen dar. Hierbei lassen sich die Übersetzungsstufen der Antriebsaggregate dann aber nicht mehr frei zueinander wählen. Daher ist darauf zu achten, dass diese Gänge hinsichtlich beider Antriebsaggregate zueinander passend gewählt werden. Dies ist bspw. beim Anfahren der Fall, wo beide Aggregate mit kurzer Übersetzungsstufe, d.h. hohem Übersetzungsverhältnis betrieben werden. Gleiches gilt für einen Fahrleistungszwischengang, der insbesondere für Manöver mit hoher Last bzw. Volllast und Summenleistung der Aggregate dargestellt werden soll.

Eine weitere vorteilhafte Ausgestaltung der Erfindung sieht vor, dass die mit dem zweiten Drehmomenteingang verbundene Welle der zweiten Übersetzungseinrichtung und eine mit dem ersten Drehmomenteingang verbundene Welle der ersten Übersetzungseinrichtung zueinander fluchtend angeordnet sind und das dem zweiten Drehmomenteingang abgewandte Ende der Welle der zweiten Übersetzungseinrichtung in einem als Hohlwelle ausgebildeten Ende der mit dem ersten Drehmomenteingang verbundenen Welle der ersten Übersetzungseinrichtung gelagert ist. Hierdurch ergeben sich sehr kompakte Bauformen bei allerdings Reihenanordnung der Antriebsaggregate mit der dazwischen angeordneten als Getriebe ausgebildeten Drehmomentüberlagerungseinrichtung.

Hierbei vorteilhaft ist zur alternativ anwählbaren drehmomentfesten Verbindung der Welle mit der festen Übersetzung eine form- und/oder reibschlüssige Schaltkupplung auf der Welle angeordnet und die Schaltkupplung ist vorzugsweise mit einem Synchronisierelement ausgeführt.

Die Erfindung erstreckt sich auch auf einen erfindungsgemäß ausgeführten Hybridantrieb, insbesondere für eine Verwendung in einem Personenkraftfahrzeug, mit einem Verbrennungsmotor, einem Elektromotor und einer wie oben ausgeführten Drehmomentüberlagerungseinrichtung. Der Verbrennungsmotor weist hierzu vorzugsweise eine Leistung zwischen 40 und 150 kW, besonderes bevorzugt eine Leistung zwischen 50 und 100 kW auf. Hierbei handelt es sich um eine Dauerleistung, die der Verbrennungsmotor bereitstellen kann. Der Elektromotor weist zweckmäßig eine Dauerleistung von 30 bis 60 kW und eine Peak-Leistung, die dem 2- bis 3-fachen der Dauerleistung entspricht. Die Erfindung eignet sich insbesondere für solche Antriebe, bei denen die Peak-Leistung des Elektromotors mindestens der Dauerleistung des Verbrennungsmotors entspricht oder deutlich darüber. Kurzzeitige Leistungsreserven sind insbesondere zum Stützen während Schaltvorgängen des Verbrennungsmotors zum Stützen des Schaltvorgangs von Vorteil.

Das erfindungsgemäße, in Anspruch 11 beanspruchte Verfahren zum Betreiben eines Hybridantriebs eines Kraftfahrzeugs, insbesondere eines Personenkraftfahrzeugs, wobei der Hybridantrieb eine Drehmomentüberlagerungseinrichtung gemäß einem der vorhergehenden Ansprüche umfasst, sieht vor, dass das Verfahren einen Hybrid-Normalbetriebsmodus mit einem ersten und einem zweiten Regelbereich umfasst.

Der erste Regelbereich erstreckt sich von einer Fahrzeuggeschwindigkeit Null bis zu einer E-Fahrgeschwindigkeitsgrenze im Hybrid-Normalbetriebsmodus, und der zweite Regelbereich erstreckt sich von der E-Fahrgeschwindigkeitsgrenze im Hybrid-Normalbetriebsmodus bis zur Höchstgeschwindigkeit des Fahrzeugs. Im ersten Regelbereich wird das Antriebsmoment des Kraftfahrzeugs nur mittels des Elektromotors erzeugt, im zweiten Regelbereich wird das Antriebsmoment des Kraftfahrzeugs im Hybridbetrieb durch ein Zusammenwirken des Verbrennungsmotors und des Elektromotors erzeugt. Dabei wird der Verbrennungsmotor unabhängig von der Lastanforderung des Fahrerwunsches im Bereich des optimalen Wirkungsgrades des Verbrennungsmotors betrieben.

Gemäß einer vorteilhaften Weiterbildung wird der Verbrennungsmotor nur in einem Fahrleistungs-Sonderbetriebsmodus kurzzeitig bei Lasten oberhalb des Bereichs optimalen Wirkungsgrades des Verbrennungsmotors betrieben.

Um im Sinne größtmöglicher E-Fahranteile eine optimale Ausnutzung des Batterieladezustandes aber auch um eine optimale und energieeffiziente Nutzung der gespeicherten Energie (elektrisch, chemisch) zu gewährleisten, umfasst das Verfahren vorteilhafterweise einen ersten Hybrid-Sonderbetriebsmodus, der in Abhängigkeit des Batterieladezustands den Hybrid-Normalbetriebsmodus ersetzt. Dieser erste Hybrid-Sonderbetriebsmodus wird aktiviert, wenn der Batterieladezustand unterhalb eines ersten Grenzwertes fällt. Mit Aktivierung des ersten Hybrid-Sonderbetriebsmodus wird gleichzeitig die E-Fahrgeschwindigkeitsgrenze auf einen niedrigeren als den ursprünglichen Wert gesetzt.

Das Verfahren umfasst gemäß einer bevorzugten Ausgestaltung weiterhin einen zweiten Hybrid-Sonderbetriebsmodus, der in Abhängigkeit des Batterieladezustands den Hybrid-Normalbetriebsmodus ersetzt. Dieser zweite Hybrid-Sonderbetriebsmodus wird aktiviert, wenn der Batterieladezustand einen zweiten Grenzwert übersteigt. Optional kann als zusätzliche Bedingung zur Aktivierung des zweiten Hybrid-Sonderbetriebsmodus eine im Mittel positive Ladeleistung durch den Verbrennungsmotor herangezogen werden. Mit Aktivierung des zweiten Hybrid-Sonderbetriebsmodus wird gleichzeitig die E-Fahrgeschwindigkeitsgrenze auf einen höheren als den ursprünglichen Wert gesetzt und/oder der Betrieb des Verbrennungsmotors wird auf eine Last unterhalb des Bereichs optimalen Wirkungsgrades des Verbrennungsmotors so eingeregelt, dass die Ladeleistung durch den Verbrennungsmotors im Mittel abnimmt, gleich Null ist oder sogar negativ wird.

Durch diese Maßnahmen wird der jeweilige Betriebsmodus in Abhängigkeit der Batterieladezustandes gewählt. Die jeweiligen Betriebszustände sind somit reproduzierbar und für den Fahrer nachvollziehbar. Es kann daher nicht zu einem unerwarteten Betriebsverhalten des Antriebes kommen.

Als Weiterentwicklung kann die bisher beschriebene batterieladezustandsabhängige Wahl des Betriebsmodus um Vorausschaufunktionen ergänzt und/oder übersteuert werden. Beispielweise kann über Vorausschaufunktionen (z.B. über eine Fahrerwunscheingabe und/oder Informationen aus dem Navigationssystem) der Batterieladezustand gezielt angehoben (z.B. zur Einfahrt in Umweltzonen) oder abgesenkt (z.B. bei Lademöglichkeiten am Zielort) werden. Die Steuerung der Batterieladung kann dabei über die effektive Ladeleistung durch den Verbrennungsmotors und/oder durch Änderung E-Fahrgeschwindigkeitsgrenze erfolgen.

Um den Fahrer ein ausgeprägtes elektrisches Fahrerlebnis zu vermitteln oder gesetzlichen Bestimmungen zu genügen kann das Verfahren weiterhin einen optional vom Fahrer anwählbaren E-Fahrbetriebsmodus umfassen, in dem das Antriebsmoment des Kraftfahrzeugs im gesamten Geschwindigkeitsbereich nur mittels des Elektromotors erzeugt wird. Auch hier ist es möglich, die Wahl des E-Fahrbetriebsmodus durch Vorausschaufunktionen (z.B. durch Fahrerwunscheingabe und/oder Informationen aus dem Navigationssystem) zu steuern. Beispielhaft kann hierdurch in städtischen oder durch gesetzliche Bestimmungen festgelegten Zonen ein E-Fahrbetriebsmodus angewählt und somit Emissionsfreiheit erzwungen werden.

Die erfindungsgemäße Drehmomentüberlagerungseinheit in Kombination mit dem erfindungsgemäßen Verfahren zum Betrieb erlaubt so eine möglichst effiziente Nutzung beider Energiearten. Die Entscheidung, welche Energieart genutzt wird, erfolgt in erster Linie auf Basis von Systemwirkungsgraden und Effizienzgründen. Durch die Trennung von Grundlast (überwiegend dargestellt durch den Verbrennungsmotor) und Dynamik für Beschleunigungsvorgänge (überwiegend dargestellt durch den Elektromotor) in Verbindung mit Lastpunktanhebung für einen effizienten Betrieb des Verbrennungsmotors und zur Erzeugung der elektrischen Energie für die Boostvorgänge, ist die vorliegende Erfindung insbesondere für Verbrennungsmotoren geeignet, die zu Lasten von Ansprechverhalten, Dynamik und Betriebsbereich bezüglich Wirkungsgrad optimiert wurden.

Weitere Einzelheiten, Merkmale und Vorteile der Erfindung ergeben sich aus der nachfolgenden Beschreibung eines Ausführungsbeispiels anhand der Zeichnungen. Es zeigt:
- Figur 1: eine Ausführungsform der erfindungsgemäßen Drehmomentüberlagerungseinrichtung,
- Figur 2: einen Hybrid-Normalbetriebsmodus,
- Figur 3: einen ersten Hybrid-Sonderbetriebsmodus,
- Figur 4: einen rein elektrischen Fahrmodus,
- Figur 5: einen verbrennungsmotorischen Fahrmodus.

In der Figur sind nur die für das Verständnis der Erfindung wesentlichen Elemente und Bauteile dargestellt. Das dargestellte Ausführungsbeispiel ist rein instruktiv zu verstehen und soll einem besseren Verständnis, aber nicht zu einer Einschränkung des Erfindungsgegenstandes dienen.

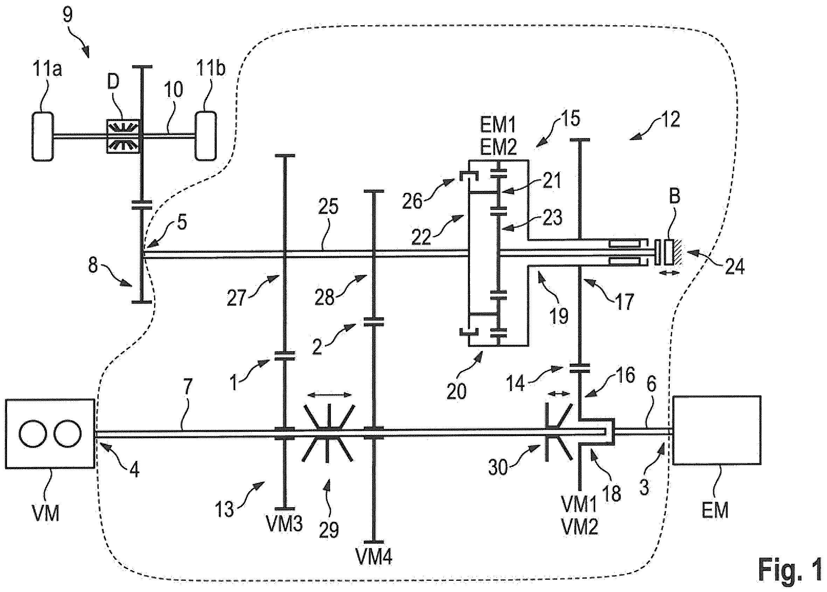

In Figur 1 ist ein erfindungsgemäß ausgeführter Hybridantrieb 1 zur Verwendung in einem Personenkraftfahrzeug dargestellt. Der Hybridantrieb 1 umfasst einen Verbrennungsmotor VM, einen Elektromotor EM sowie eine als Getriebe 2 erfindungsgemäß ausgeführte Drehmomentüberlagerungseinrichtung. Das Getriebe 2 umfasst einen ersten Drehmomenteingang 3 und einen zweiten Drehmomenteingang 4 sowie einen Drehmomentausgang 5.

Der Elektromotor EM ist mit dem ersten Drehmomenteingang 3 drehmomentfest gekoppelt, wobei die drehmomentfeste Kopplung hier mittels einer ersten Welle 6 erfolgt. Die erste Welle 6 ist hierzu drehmomentfest mit der Rotorwelle (in Figur 1 nicht dargestellt) des Elektromotors EM gekoppelt. Entsprechende Kopplungen und/oder Koppelelemente zur Kopplung zweier Wellen sind im Stand der Technik bekannt.

Der Verbrennungsmotor VM ist mit dem zweiten Drehmomenteingang 4 drehmomentfest gekoppelt, wobei die drehmomentfeste Kopplung hier mittels einer zweiten Welle 7 erfolgt. Die zweite Welle 7 ist hierzu drehmomentfest mit der Kurbelwelle (in Figur 1 nicht dargestellt) des Verbrennungsmotors VM gekoppelt. Entsprechende Kopplungen und/oder Koppelelemente zur Kopplung zweier Wellen sind im Stand der Technik bekannt.

Der Drehmomentausgang 5 des Getriebes 2 ist mit einem Eingangsstirnrad 8 eines Stirnraddifferentials D des Abtriebs 9 des Fahrzeugs drehmomentfest gekoppelt, wobei die Kopplung hier mittels eines Festsitzes des Eingangsstirnrads 8 erfolgt. Das Stirnraddifferential D ist hier mit einem Übersetzungsverhältnis zwischen 3 und 4 ausgeführt. Der Abtrieb 9 umfasst des Weiteren die Abtriebswelle 10 sowie die Räder 11a und 11b. Hierbei ist sowohl ein Frontantrieb als auch im Grundsatz ein Heck-,Standard- oder auch Allradantrieb als Anwendung des erfindungsgemäßen Hybridantriebs möglich. In Figur 1 dargestellt ist ein Frontantrieb.

Das erfindungsgemäß ausgeführte Getriebe 2 umfasst eine erste Übersetzungseinrichtung, die hier als erstes Teilgetriebe 12 ausgeführt ist, und eine zweite Übersetzungseinrichtung, die hier als zweites Teilgetriebe 13 ausgeführt ist.

Die erste Welle 6 ist hier als Bestandteil des ersten Teilgetriebes 12 ausgeführt, die zweite Welle 7 als Teil des zweiten Teilgetriebes 13. Somit sind die beiden Teilgetriebe über die jeweiligen Drehmomenteingänge 3 und 4 mit den jeweiligen Antriebsaggregaten EM und VM drehmomentfest gekoppelt.

Das erste Teilgetriebe 12 umfasst des Weiteren eine feste Übersetzung, die hier als Stirnradsatz 14 ausgebildet ist, sowie genau einen Planetenradsatz 15.

Der als feste Übersetzung ausgebildete Stirnradsatz 14 umfasst ein erstes, dem Elektromotor EM zugewandtes Stirnrad 16 sowie ein zweites, dem Planetenradsatz 15 zugewandtes Stirnrad 17.

Das erste Stirnrad 16 des als feste Übersetzung ausgebildeten Stirnradsatzes 14 ist auf dem dem Drehmomenteingang 3 abgewandten Ende der Welle 6 auf dieser Welle 6 mittels Festsitz angeordnet. Das dem Drehmomenteingang 3 abgewandte Ende der Welle 6 ist hier in einem Endabschnitt der Welle 3 als Hohlwelle 18 ausgeführt.

Das zweite Stirnrad 17 des als feste Übersetzung ausgebildeten Stirnradsatzes 14 ist mittels Festsitz auf einem zylindrischen Ausläufer 19 des Hohlrades 20 des Planetenradsatzes 15 angeordnet.

Der als feste Übersetzung ausgebildete Stirnradsatz 14 ist hier mit einem Übersetzungsverhältnis von 2 ausgeführt.

Der genau eine Planetenradsatz 15 umfasst das Hohlrad 20, die Planeten 21, den Planetenträger 22 und die Sonne 23. Die Sonne 23 ist mittels der lastschaltfähigen Reibbremse 24 mit einem (in Figur 1 nicht dargestellten) Gehäuse des Getriebes 2 ortsfest verbremsbar.

Wird die Sonne 23 mittels der Reibbremse 24 ortsfest verbremst, so laufen Hohlrad 20 und Planeten 21 mit gekoppeltem Planetenträger 22 auf der feststehenden Sonne 23 ab, wodurch ein von dem Elektromotor EM über die feste Übersetzung 14 mit einer Drehzahl eingeleitetes Drehmoment entsprechend dem Übersetzungsverhältnis zwischen Hohlrad 20 und Planeten 21 bzw. Planetenträger 22 drehzahl- und drehmomentübersetzt wird und über den Planetenträger 22 auf die Ausgangswelle 25 übertragen wird. Durch Verbremsung der Sonne 23 ist somit ein erster Gang EM1 als eine Übersetzungsstufe des ersten Teilgetriebes 12 darstellbar. Das Übersetzungsverhältnis des Planetenradsatzes bei ortsfest verbremster Sonne 23 ist hier zwischen 1,5 und 1,9, bevorzugt 1,8.

Der zweite Gang EM2 als zweite Übersetzungsstufe des ersten Teilgetriebes 12 ist durch Verblockung des Planetenradsatzes 15 darstellbar. Hierzu wird die Kupplung 26 zwischen Hohlrad 20 und Planetenträger 22 geschlossen, wodurch der gesamte Planetenradsatz 15 verblockt ist und als Ganzes umläuft. Das Übersetzungsverhältnis des Planetenradsatzes 15 ist somit 1. Ein von dem Elektromotor EM über die feste Übersetzung 14 mit einer Drehzahl eingeleitetes Drehmoment wird mit dem Übersetzungsverhältnis von 1 drehzahl- und drehmomentübersetzt und über den Planetenträger 22 auf die Ausgangswelle 25 übertragen wird.

In dem in Figur 1 gezeigten Ausführungsbespiel sind somit genau zwei Gänge als zwei alternativ anwählbare Übersetzungsstufen des ersten Teilgetriebes 12 darstellbar.

Die Schaltübergänge von erstem zu zweitem Gang des ersten Teilgetriebes 12 und umgekehrt können durch Schließen bzw. Öffnen der Kupplung 26 bei gleichzeitigem Öffnen bzw. Verbremsen der Reibbremse 24 unter Last und somit ohne Zugkrafteinbruch dargestellt werden.

Sind sowohl die Kupplung 26 als auch die Reibbremse 24 offen, so liegt keine Momentenkopplung zur Ausgangswelle 25 vor. Dieser Betriebszustand ist für die Funktion "Standladen" mit Leistungsfluss vom Verbrennungsmotor VM zu dem in diesem Betriebszustand generatorisch betriebenen Elektromotor EM bei stehendem Fahrzeug von Interesse.

Die Ausgangswelle 25 ist auf der dem Planetenradsatz 15 abgewandten Seite als Drehmomentausgang 5 des Getriebes 2 ausgebildet.

Das zweite Teilgetriebe 13 umfasst des Weiteren zur Darstellung einer ersten und einer zweiten alternativ anwählbaren Übersetzungsstufe zwei Stirnradsätze 27 und 28. Die Stirnradsätze sind als im Stand der Technik bekannte Losrad-/Festrad-Kombination ausgeführt, wobei die auf der zweiten Welle 7 angeordneten Losräder der Stirnradsätze 27 und 28 mittels einer zweiseitig wirkenden, axial auf der Welle 7 verschiebbaren Klauenkupplung 29 alternativ zuschaltbar sind. Die Klauenkupplung 29 ist aus zwei Teilklauenkupplungen aufgebaut, die beide als formschlüssige Schaltkupplungen ausgeführt sind. Ferner weisen die beiden Teilklauenkupplungen jeweils zusätzlich ein Synchronisierelement, hier jeweils ein Einfach-Synchro (in Figur 1 nicht dargestellt) auf.

Durch formschlüssiges Eingreifen der Klauenkupplung 29 in das Losrad des Stirnradsatzes 27 wird ein drehmomentfester Formschluss zwischen der zweiten Welle 7 und dem Stirnradsatz 27 hergestellt. Entsprechend dem Übersetzungsverhältnis des Stirnradsatzes 27 wird ein vom Verbrennungsmotor VM mit einer Drehzahl eingeleitetes Drehmoment drehzahl- und drehmomentübersetzt und über das Festrad des Stirnradsatzes 27 auf die mit dem Festrad fest verbundene Ausgangswelle 25 und von dort auf das Stirnraddifferential D übertragen.

Für den Stirnradsatz 28 gilt das gleiche Wirkprinzip.

Das Übersetzungsverhältnis des Stirnradsatzes 27 ist für das hier gezeigte Ausführungsbeispiel zwischen 1 und 1,5, das des Stirnradsatzes 28 zwischen 0,6 und 1,2. Die Übersetzungsstufe mit dem Stirnradsatz 27 ist hier als dritter Gang VM3 des zweiten Teilgetriebes 13, die Übersetzungsstufe mit dem Stirnradsatz 28 als vierter Gang VM4 des zweiten Teilgetriebes 13 ausgeführt.

Zur Darstellung des ersten Gangs VM1 und des zweiten Gangs VM2 als zwei weitere alternativ anwählbare Übersetzungsstufen des zweiten Teilgetriebes ist die zweite Welle 7 mit dem ersten Stirnrad 16 des als feste Übersetzung ausgebildeten Stirnradsatzes 14 mittels formschlüssiger Klauenkupplung 30 alternativ zu den Gängen 3 und 4 drehmomentfest verbindbar. In Falle der formschlüssig mit dem Stirnradsatz 14 verbundenen Klauenkupplung 30 wird ein von dem Verbrennungsmotor VM geliefertes Drehmoment von der zweiten Welle 7 über den Stirnradsatz 14 auf den Planetenradsatz 15 übertragen. Je nach Schaltzustand des Planetenradsatzes 15 wird das Drehmoment entsprechend dem Übersetzungsverhältnis VM1 = EM1 oder VM2 = EM2 auf die Abtriebswelle 25 und von dort auf das Stirnraddifferential D und den Abtrieb 9 übertragen.

Die Klauenkupplung 30 ist hier mit Einfach-Synchro ausgestattet.

VM1 ist hier als kurzer Anfahrgang ausgeführt. Eine unmittelbar nach dem Verbrennungsmotor VM angeordnete Anfahrkupplung ist in Figur 1 nicht dargestellt. Die Ausführung und Anordnung einer solchen Anfahrkupplung ist dem Fachmann geläufig. VM2 ist hier als fahrleistungsseitiger Zwischengang zur Darstellung von Hochlast- oder Volllastmanövern mit Summenleistung der Aggregate ausgeführt. VM3 ist hier als vmax-Gang ausgeführt, VM4 als Effizienzgang.

Die Übersetzungen der einzelnen Übersetzungsstufen liegen bevorzugt in folgenden Bereichen:
- Übersetzung Differential 9: ca. 2,5 bis 4, besonders bevorzugt 3,5 bis 4
- Übersetzung Planetenradsatz 15:
   ∘ verblockt: 1
   ∘ mit Sonne 23 gegenüber Gehäuse 24 ortsfest verbremst ca. 1,5 bis 2, besonders bevorzugt 1,7 bis 1,8
- Übersetzung der festen Übersetzung 14: ca. 1,5 bis 3, besonders bevorzugt ca. 1,5 bis 2
- Übersetzung des Stirnradsatzes 27: ca.0,9 bis 1,4, besonders bevorzugt 1 bis 1,2
- Übersetzung des Stirnradsatz 28: ca. 0,6 bis 0,8, besonders bevorzugt 0,7
Für die Gänge gelten folgende bevorzugten Übersetzungsbereiche:
- Übersetzung EM1: ca. 11 bis 14, besonders bevorzugt ca. 12
- Übersetzung EM2: ca. 6 bis 9, besonders bevorzugt 6 bis 7
- Übersetzung VM 1: wie Übersetzung EM1 (ca. 11 bis 14, besonders bevorzugt ca. 12)
- Übersetzung VM2: wie Übersetzung EM 2 (ca. 6 bis 9, besonders bevorzugt 7 bis 8) Übersetzung VM3: ca. 3,5 bis 5, besonders bevorzugt 3,5 bis 4
- Übersetzung VM4: ca. 2,5 bis 3,5, bevorzugt ca. 3

Gemäß Figur 1 sind die zweite Welle 7 und die erste Welle 6 hier zueinander fluchtend angeordnet, wobei das dem Verbrennungsmotor VM abgewandte Ende der zweiten Welle 7 in dem als Hohlwelle 18 ausgebildeten Ende der ersten Welle 6 gelagert ist.

Der in Figur 1 ausgeführte Hybridantrieb baut sehr kompakt. Die Antriebsaggregate können hinsichtlich der Gänge VM3 und VM4 sowie EM1 und EM2 individuell aggregatespezifisch angesteuert werden, wodurch hohe Fahrdynamik bei hoher Effizienz erzielt wird. Aufgrund des sehr kompakten Aufbaus des Getriebes mit wenigen Zahneingriffen in den jeweiligen Momentenpfaden ergibt sich ein extrem guter Wirkungsgrad des Getriebes im Vergleich zu aus dem Stand der Technik bekannten Getrieben. Zudem lassen sich die Schaltübergänge zwischen EM1 und EM2 (und ebenso VM1 und VM2) zugkraftunterbrechungsfrei realisieren. Schaltübergänge zwischen VM2 zu VM3 und VM4 erfolgen gestützt über die Elektromaschine EM und somit mit hinreichend guter Schaltqualität.

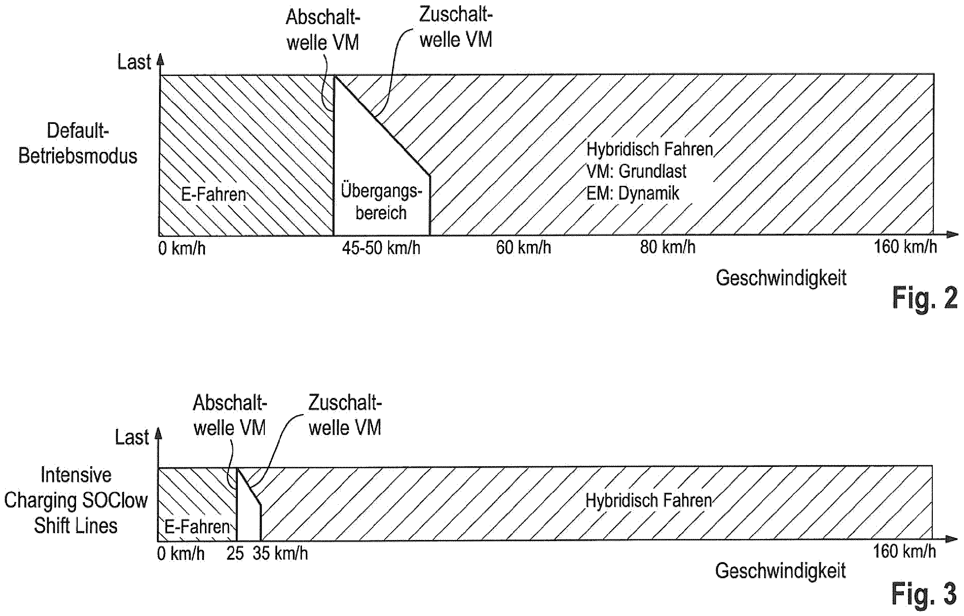

Der Hybridantrieb eines Kraftfahrzeuges, welcher die vorbeschriebene Drehmomentüberlagerungseinrichtung umfasst, wird vorteilhafterweise derart betrieben, dass er einen wie in Figur 2 dargestellten Hybrid-Normalbetriebsmodus mit einem ersten und einem zweiten Regelbereich umfasst.

Der erste Regelbereich erstreckt sich von einer Fahrzeuggeschwindigkeit Null bis zu einer E-Fahrgeschwindigkeitsgrenze, beispielsweise ca. 60 km/h. Der zweite Regelbereich erstreckt sich von der E-Fahrgeschwindigkeitsgrenze bis zur Höchstgeschwindigkeit des Fahrzeugs.

Es ist vorteilhaft, die E-Fahrgeschwindigkeitsgrenze als Zuschalt- und als Abschaltschwelle für den Verbrennungsmotor zu definieren. Die Zuschaltschwelle ist dann der Fahrgeschwindigkeitswert, bei dem bei zunehmender Fahrgeschwindigkeit das Umschalten von erstem Regelbereich in den zweiten Regelbereich erfolgt. Die Abschaltschwelle ist dann der Fahrgeschwindigkeitswert, bei dem bei abnehmender Fahrgeschwindigkeit das Umschalten von zweitem Regelbereich in den ersten Regelbereich erfolgt.

Üblicherweise liegen Zuschaltschwelle und Abschaltschwelle ca. 10-15 km/h auseinander.

Im ersten Regelbereich wird das Antriebsmoment des Kraftfahrzeugs nur mittels des Elektromotors EM erzeugt, im zweiten Regelbereich wird das Antriebsmoment des Kraftfahrzeugs im Hybridbetrieb durch ein Zusammenwirken des Verbrennungsmotors VM und des Elektromotors EM erzeugt.

Die Unterteilung in zwei Regelbereiche ermöglicht, die Antriebskonstellation jeweils energetisch optimal auszurichten. So ist es aus Effizienzsicht vorteilhaft, in dem ersten Regelbereich elektromotorisch zu fahren. Hier entfaltet der Elektromotor einen höheren Wirkungsgrad als dies mit dem verbrennungsmotorischen Aggregat möglich wäre. Wenn die für den elektromotorischen Betrieb erforderliche Energiemenge überdies über ein Laden aus dem Stromnetz bereitgestellt wurde, kann dies zu einer ökologischen CO2-Neutralität dieser Fahrzustände führen. Neben Effizienz ist der emissionsfreie Betrieb z.B. im innerstädtischen Bereich ein weiteres Kriterium zur Wahl der E-Fahrgeschwindigkeitsgrenzen. Hinsichtlich beider Kriterien ist im Normalbetrieb ein E-Fahrgeschwindigkeit im Bereich von ca. 60 km/h ein guter Kompromiss.

In dem zweiten Regelbereich hingegen ist es aus Effizienz- und Wirkungsgradsicht vorteilhafter, in einem kombinierten Betriebsmodus, also im Zusammenspiel Verbrennungsmotor und Elektromotor zu fahren.

Hierbei ist es energetisch besonders vorteilhaft, den Verbrennungsmotor durchgängig bei Konstantbetrieb, z.B. entlang seiner beopt-Linie, zu betreiben und die für die Fahraufgabe erforderliche kurzzeitige Dynamik über den Elektromotor bereitzustellen. Unter Dynamik ist hierbei sowohl positive Dynamik im Sinne einer Beschleunigung des Fahrzeugs als auch negative Dynamik im Sinne einer Verzögerung des Fahrzeugs zu verstehen.

Neben einer optimalen Effizienz des Hybridantriebs in jedem Betriebs- und Fahrzustand des Fahrzeugs wird durch das erfindungsgemäße Verfahren auch sichergestellt, dass Fahrzeuge mit einem solchen Hybridantrieb eine zu herkömmlichen verbrennungsmotorisch betriebenen Fahrzeugen vergleichbare Gesamtreichweite bei gleichzeitig hoher E-Reichweite aufweisen, wodurch ein solches Fahrzeug sowohl für städtischen Betrieb mit ggfs. Einfahrbeschränkungen für nur elektromotorischen Betrieb als auch für große Überlandstrecken geeignet ist, ohne dass ein aufwändiges und zeitraubendes Strom-"Nachtanken" erforderlich wäre.

Der Erzeugung des Antriebsmoments im ersten Regelbereich gemäß erfindungsgemäßer Regelstrategie unterscheidet sich von aus dem Stand der Technik üblicherweise bekannten Verfahren vergleichbarer Hybridantriebe auch darin, dass auch bei Beschleunigungen kein Leistungszustart des Verbrenners zugelassen wird. Einerseits wird durch den erfindungsgemäßen Betrieb des ersten Regelbereichs sichergestellt, dass in dem ersten Regelbereich ausschließlich elektromotorisch gefahren wird, andererseits können derartige aus dem Stand der Technik bekannten Leistungszustarts zu einer Wirkungsgradverschlechterung als auch zu Problemen hinsichtlich Emissionierung und Warmlaufverhaltend es Verbrennungsmotors führen.

Übersteigt die Leistungsanforderung die Leistungsbereitstellung des Elektromotors (z.B. Rennstartfunktion), so können Zustarts des Verbrennungsmotors in Beschleunigungsphasen in Sinne einer Sonderfunktion zur optimalen Nutzung der Summenleistung zur Erreichung maximaler Fahrleistungen erfolgen.

Dabei wird der Verbrennungsmotor VM unabhängig von der Lastanforderung des Fahrerwunsches im Bereich optimalen Wirkungsgrades des Verbrennungsmotors VM oder nahe diesem betrieben. Die erfindungsgemäße Regelung des verbrennungsmotorischen Betriebs bei optimalem Wirkungsgrad des Verbrennungsmotors umfasst auch die Einreglung des verbrennungsmotorischen Betriebspunktes auf einen optimalen Systemwirkungsgrad, der sich aus dem verbtrennungsmotorischen Wirkungsgrad bei dem jeweiligen verbrennungsmotorischen Betriebspunkt, einem Lade-/Entladewirkungsgrad des elektrischen Energiespeichers bei der dem jeweiligen verbrennungsmotorischen Betriebspunkt, dem generatorischen Wirkungsgrads des Elektromotors und Ansteuerelektronik und der jeweiligen Fahraufgabe sich ergebenden Lade-oder Entladeleistung des Hochvoltbatteriesystems ergibt.

Es kann also sein, dass zur Optimierung des Systemwirkungsgrades ein niedrigerer Wirkungsgrad als der maximal mögliche Wirkungsgrad (beopt-Wirkungsgrad) des Verbrenners eingeregelt wird. Dies ist insbesondere dann der Fall, wenn bei Einregelung des maximal möglichen Wirkungsgrades des Verbrenners eine erhebliche Ladeleistung generieren würde, die zu einer überproportionalen Degradation des Wirkungsgrades des HochvoltBatteriesystems führen würde.

Weiterhin ist ein Fahrleistungs-Sonderbetriebsmodus möglich. Nur in diesem Fahrleistungs-Sonderbetriebsmodus wird der Verbrennungsmotor VM kurzzeitig bei Lasten oberhalb des Bereichs optimalen Wirkungsgrades des Verbrennungsmotors VM betrieben. Hierdurch wird ermöglicht, dass kurzzeitig die bei dem Fahrzustand des Fahrzeugs maximal verfügbare Leistung des Verbrennungsmotors abgerufen werden kann, auch wenn dies zu einer Wirkungsgradverschlechterung des verbrennungsmotorischen Betriebs führt.

Das erfindungsgemäße Verfahren umfasst weiterhin einen ersten Hybrid-Sonderbetriebsmodus, der in Abhängigkeit des Batterieladezustands den Hybrid-Normalbetriebsmodus ersetzt. Dieser erste Hybrid-Sonderbetriebsmodus wird aktiviert, wenn der Batterieladezustand unterhalb eines ersten Grenzwertes fällt. Mit Aktivierung des ersten Hybrid-Sonderbetriebsmodus wird die E-Fahrgeschwindigkeitsgrenze auf einen niedrigeren als den ursprünglichen Wert gesetzt.

Der Übergang vom Hybrid-Normalbetriebsmodus zu dem ersten Hybrid-Sonderbetriebsmodus kann auch kontinuierlich bzw. stufenlos erfolgen. Insbesondere kann eine solche kontinuierlichen bzw. stufenlose Einregelung des jeweiligen Betriebsmodus auch auf Basis von Information zur gewünschten Fahrstrecke und der aktuellen Verkehrssituation (Vorausschau-Funktion) erfolgen.

Insgesamt bedeutet dies, dass bei abnehmendem Batterieladezustand der erste Regelbereich, in dem ausschließlich elektromotorisch gefahren wird, hin zu niedrigeren Geschwindigkeiten reduziert wird. Dies könnte im Extremfall bei völlig entladenem Batteriezustand dazu führen, dass der Übergang in den zweiten Regelbereich bereits bei 0 km/h erfolgt. Zusätzlich kann bei geringem Batterieladezustand und negativer Ladebilanz der Betriebspunkt des Verbrenners oberhalb des Bereichs optimaler Wirkungsgrade in Richtung Volllast verschoben werden, um eine höhere Ladeleistung zu generieren. Herkömmliche Betriebsstrategien degradieren hier üblicherweise über die Last, d.h. bei abnehmendem batterieladezustand wird bereits bei geringerer Lastanforderung in den hybridischen Betrieb umgeschaltet.

Das Verfahren umfasst weiterhin einen zweiten Hybrid-Sonderbetriebsmodus, der in Abhängigkeit des Batterieladezustands den Hybrid-Normalbetriebsmodus ersetzt. Der zweite Hybrid-Sonderbetriebsmodus wird aktiviert, wenn der Batterieladezustand einen zweiten Grenzwert übersteigt und eine Ladeleistung des Verbrennungsmotors größer Null ist. Mit Aktivierung des zweiten Hybrid-Sonderbetriebsmodus kann die E-Fahrgeschwindigkeitsgrenze auf einen höheren als den ursprünglichen Wert gesetzt wird und/oder der Betrieb des Verbrennungsmotors VM wird auf eine Last unterhalb des Bereichs optimalen Wirkungsgrades des Verbrennungsmotors VM so eingeregelt, dass die Ladeleistung durch den Verbrennungsmotor VM gleich Null ist.

Auch der Übergang vom Normalbetriebsmodus zum zweiten Sonderbetriebsmodus erfolgt vorteilhaft kontinuierlich bzw. stufenlos und besonders vorteilhaft unter Einbeziehung von Vorausschau-Funktionen und/oder als Funktion des Batterieladezustands.

In beiden Betriebsmodi ist neben der Systemwirkungsgrade der Batterieladezustand ein Kriterium für die Wahl des Betriebspunktes des Verbrennungsmotors und somit auch für die Ladeleistung. Für sehr hohe Batterieladezustände (optional in Verbindung mit positiver mittlerer Ladebilanz) wird die Ladeleistung bis auf Null oder ins Negative verringert, für sehr niedrige Batterieladezustände (optional in Verbindung mit einer negativen mittleren Ladebilanz) bis zur Volllast des Verbrenners erhöht, auch wenn sich dadurch Nachteile im Wirkungsgrad für den Verbrenner ergeben.

In vielen Fällen wird es von Vorteil sein, dass der Verbrennungsmotor im zweiten Regelbereich auch in Schubphasen bei konstantem Betriebspunkt weiter befeuert betrieben wird, sogenannter befeuerter Schub. Der befeuerte Schub ist insbesondere dann von Vorteil, wenn kurzfristig viel Ladeenergie generiert werden soll.

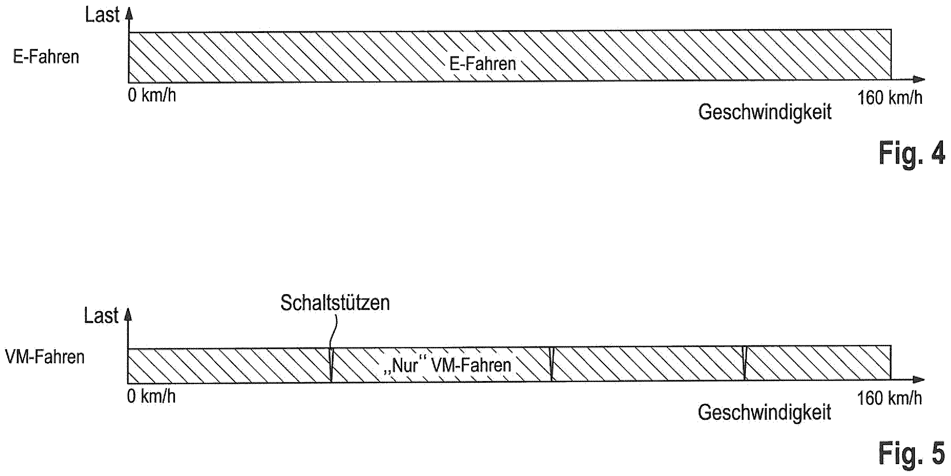

Weiterhin umfasst das Verfahren einen wie in Figur 4 dargestellten, optional vom Fahrer anwählbaren E-Fahrbetriebsmodus, in dem das Antriebsmoment des Kraftfahrzeugs im gesamten Geschwindigkeitsbereich nur mittels des Elektromotors EM erzeugt wird.

Schließlich ist auch, wie in Figur 5 dargestellt, ein rein verbrennungsmotorischer Betrieb darstellbar. Sofern hoher Schaltkomfort erwünscht ist, muss der Elektromotor bei rein verbrennungsmotorischem Betrieb nur in Schaltphasen kurzzeitig die Stützfunktion während des Schaltvorgangs übernehmen

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung, wie in den angehängten Patentansprüchen definiert, zu verlassen.

### Bezugszeichenliste

- 1: Hybridantrieb
- 2: Getriebe
- 3: erster Drehmomenteingang
- 4: zweiter Drehmomenteingang
- 5: Drehmomentausgang
- 6: erste Welle
- 7: zweite Welle
- 8: Eingangsstirnrad
- 9: Abtrieb
- 10: Abtriebswelle
- 11a: Räder
- 11b: Räder
- 12: erstes Teilgetriebe
- 13: zweites Teilgetriebe
- 14: Stirnradsatz
- 15: Planetenradsatz
- 16: erstes Stirnrad
- 17: zweites Stirnrad
- 18: Hohlwelle
- 19: Ausläufer
- 20: Hohlrad
- 21: Planeten
- 22: Planetenträger
- 23: Sonne
- 24: Reibbremse
- 25: Ausgangswelle
- 26: Kupplung
- 27: Stirnradsatz
- 28: Stirnradsatz
- 29: Klauenkupplung
- 30: Klauenkupplung
- D: Stirnraddifferential
- EM: Elektromotor
- EM1: erster Gang
- EM2: zweiter Gang
- VM: Verbrennungsmotor
- VM1: erster Gang
- VM2: zweiter Gang
- VM3: dritter Gang
- VM4: vierter Gang

## Patentansprüche

1. Drehmomentüberlagerungseinrichtung zur Verwendung in einem Hybridantrieb (1) für Kraftfahrzeuge, insbesondere zum Einsatz in Personenkraftfahrzeugen,
wobei der Hybridantrieb (1) einen Verbrennungsmotor (VM), einen Elektromotor (EM) und die Drehmomentüberlagerungseinrichtung umfasst, und mittels der Drehmomentüberlagerungseinrichtung ein Drehmoment des Verbrennungsmotors (VM) mit einem Drehmoment des Elektromotors (EM) überlagerbar ist und die Drehmomentüberlagerungseinrichtung ausgangsseitig mit einem Abtrieb (9) des Fahrzeugs verbunden ist,
und die Drehmomentüberlagerungseinrichtung einen ersten und einen zweiten Drehmomenteingang (3, 4) und einen Drehmomentausgang (5) sowie eine erste Übersetzungseinrichtung (12) und eine zweite Übersetzungseinrichtung (13) aufweist, und der Elektromotor (EM) mit dem ersten Drehmomenteingang (3) drehmomentfest koppelbar ist und der Verbrennungsmotor (VM) mit dem zweiten Drehmomenteingang (4) drehmomentfest koppelbar ist, wobei der erste Drehmomenteingang (3) mit der ersten Übersetzungseinrichtung (12) und der zweite Drehmomenteingang (4) mit der zweiten Übersetzungseinrichtung (13) drehmomentfest verbunden ist, und die Übersetzungseinrichtungen (12,13) jeweils abtriebsseitig mit dem Drehmomentausgang (5) der Drehmomentüberlagerungseinrichtung drehmomentfest gekoppelt sind,
wobei beide Übersetzungseinrichtungen (12, 13) jeweils mindestens zwei alternativ anwählbare Übersetzungsstufen (EM1, EM2, VM3, VM4) umfassen,
wobei die erste Übersetzungseinrichtung (12) zur Darstellung der mindestens zwei alternativ anwählbaren Übersetzungsstufen (EM1, EM2) wenigstens einen Planetenradsatz (15) umfasst,
und die zweite Übersetzungseinrichtung (13) zur Darstellung der mindestens zwei alternativ anwählbaren Übersetzungsstufen (VM3, VM4) wenigstens zwei Stirnradsätze (27, 28) umfasst, und
wobei der Planetenradsatz (15) ein Hohlrad (20), Planeten (21), einen Planetenträger (22) und eine Sonne (23) aufweist, **dadurch gekennzeichnet, dass**
- die erste Übersetzungseinrichtung (12) einen Stirnradsatz (14) aufweist, der ein erstes Stirnrad (16), das auf einer, den Elektromotor (EM) drehmomentfest mit dem ersten Drehmomenteingang (3) koppelnden ersten Welle (6) mittels Festsitz angeordnet ist, und ein zweites Stirnrad (17), das mittels Festsitz auf einem zylindrischen Ausläufer (19) des Hohlrads (20) angeordnet ist, aufweist,
- die Sonne (23) zur Darstellung einer ersten Übersetzungsstufe (EM1) mittels einer lastschaltfähigen ' Reibbremse (24) mit einem Gehäuse des Drehmomentüberlagerungseinrichtung ortsfest verbremsbar ist und
- der Planetenradsatz (15) zur Darstellung einer zweiten Übersetzungsstufe (EM2) durch Schließen einer Kupplung (26) zwischen dem Hohlrad (20) und dem Planetenträger (22) verblockbar ist.

2. Drehmomentüberlagerungseinrichtung gemäß Anspruch 1, **dadurch gekennzeichnet, dass** die erste Übersetzungseinrichtung (12) genau einen Planetenradsatz (15) umfasst, wobei vorzugsweise genau zwei Übersetzungsstufen (EM1, EM2) alternativ anwählbar sind.

3. Drehmomentüberlagerungseinrichtung gemäß einem der vorhergehenden Ansprüche, **dadurch gekennzeichnet, dass** der Planetenradsatz (15) zur Anwahl der Übersetzungsstufen (EM1, EM2) mit mindestens der lastschaltfähigen Reibbremse (24) und der Kupplung (26) in Form einer Reibkupplung (26) ausgeführt ist.

4. Drehmomentüberlagerungseinrichtung gemäß einem der vorhergehenden Ansprüche, **dadurch gekennzeichnet, dass** die zweite Übersetzungseinrichtung (13) zur Anwählbarkeit wenigstens eines der wenigstens zwei als Übersetzungsstufen ausgebildeten Stirnradsätze (27, 28) wenigstens eine form- und/oder reibschlüssige Schaltkupplung (29) umfasst.

5. Drehmomentüberlagerungseinrichtung gemäß Anspruch 4, **dadurch gekennzeichnet, dass** die wenigstens eine Schaltkupplung (29) mit einem Synchronisierelement ausgeführt ist.

6. Drehmomentüberlagerungseinrichtung gemäß einem der vorhergehenden Ansprüche, **dadurch gekennzeichnet, dass** zwischen dem Elektromotor (EM) und dem Planetenradsatz (15) eine feste Übersetzung angeordnet ist, nämlich der Stirnradsatz (14) der ersten Übersetzungseinrichtung (12), und die feste Übersetzung vorzugsweise ein Übersetzungsverhältnis zwischen 1,5 und 4, besonders bevorzugt ein Übersetzungsverhältnis zwischen 1,5 und 3 aufweist.

7. Drehmomentüberlagerungseinrichtung gemäß Anspruch 6, **dadurch gekennzeichnet, dass** zur Darstellung einer oder zweier weiterer alternativ anwählbarer Übersetzungsstufen (VM1, VM2) eine mit dem zweiten Drehmomenteingang (4) verbundene Welle (7) der zweiten Übersetzungseinrichtung (13) mit dem ersten Stirnrad (16) der als Stirnradsatz (14) ausgebildeten festen Übersetzung alternativ anwählbar drehmomentfest verbindbar ist.

8. Drehmomentüberlagerungseinrichtung gemäß Anspruch 7, **dadurch gekennzeichnet, dass** die mit dem zweiten Drehmomenteingang (4) verbundene Welle (7) der zweiten Übersetzungseinrichtung (13) und die mit dem ersten Drehmomenteingang (3) verbundene erste Welle (6) der ersten Übersetzungseinrichtung (12) zueinander fluchtend angeordnet sind und
das dem zweiten Drehmomenteingang (4) abgewandte Ende der mit dem zweiten Drehmomenteingang (4) verbundenen Welle (7) der zweiten Übersetzungseinrichtung (13) in einem als Hohlwelle (18) ausgebildeten Ende der mit dem ersten Drehmomenteingang (3) verbundenen ersten Welle (6) der ersten Übersetzungseinrichtung (12) gelagert ist.

9. Drehmomentüberlagerungseinrichtung gemäß einem der Ansprüche 7 oder 8, **dadurch gekennzeichnet, dass** zur alternativ anwählbaren drehmomentfesten Verbindung der mit dem zweiten Drehmomenteingang (4) verbundenen Welle (7) mit der festen Übersetzung (14) eine form- und/oder reibschlüssige Schaltkupplung (30) auf der mit dem zweiten Drehmomenteingang (4) verbundenen Welle (7) angeordnet ist und die Schaltkupplung (30) vorzugsweise mit einem Synchronisierelement ausgeführt ist.

10. Hybridantrieb (1) umfassend einen Verbrennungsmotor (VM), einen Elektromotor (EM) und eine Drehmomentüberlagerungseinrichtung gemäß einem der Ansprüche 1 bis 9, wobei der Verbrennungsmotor (VM) eine Leistung zwischen 40 und 150 kW, vorzugsweise eine Leistung zwischen 50 und 100 kW aufweist, und der Elektromotor (EM) eine Dauerleistung von 30 bis 60 kW und eine Peak-Leistung, die dem 2- bis 3-fachen der Dauerleistung entspricht, aufweist.

11. Verfahren zum Betreiben eines Hybridantriebs eines Kraftfahrzeugs, insbesondere eines Personenkraftfahrzeugs,
wobei der Hybridantrieb eine Drehmomentüberlagerungseinrichtung gemäß einem der vorhergehenden Ansprüche umfasst, und das Verfahren einen Hybrid-Normalbetriebsmodus mit einem ersten und einem zweiten Regelbereich umfasst,
wobei sich der erste Regelbereich von einer Fahrzeuggeschwindigkeit Null bis zu einer E-Fahrgeschwindigkeitsgrenze im Hybrid-Normalbetriebsmodus erstreckt und sich der zweite Regelbereich von der E-Fahrgeschwindigkeitsgrenze im Hybrid-Normalbetriebsmodus bis zur Höchstgeschwindigkeit des Fahrzeugs erstreckt,
**dadurch gekennzeichnet, dass**
im ersten Regelbereich das Antriebsmoment des Kraftfahrzeugs nur mittels des Elektromotors (EM) erzeugt wird, wobei die Sonne (23) zur Darstellung der ersten Übersetzungsstufe (EM1) mittels der lastschaltfähigen Reibbremse (24) mit dem Gehäuse des Drehmomentüberlagerungseinrichtung ortsfest verbremst wird oder der Planetenradsatz (15) zur Darstellung der zweiten Übersetzungsstufe (EM2) durch Schließen der Kupplung (26) zwischen dem Hohlrad (20) und dem Planetenträger (22) verblockt wird,
im zweiten Regelbereich das Antriebsmoment des Kraftfahrzeugs im Hybridbetrieb durch ein Zusammenwirken des Verbrennungsmotors (VM) und des Elektromotors (EM) erzeugt wird, wobei zur Darstellung einer ersten Übersetzungsstufe (VM1) und einer zweiten Übersetzungsstufe (VM2) eine den Verbrennungsmotor (VM) drehmomentfest mit dem zweiten Drehmomenteingang (4) koppelnde zweite Welle (7) mittels einer formschlüssigen Klauenkupplung (30) drehmomentfest mit dem ersten Stirnrad (16) verbunden wird und
der Verbrennungsmotor (VM) unabhängig von der Lastanforderung des Fahrerwunsches im Bereich optimalen Wirkungsgrades des Verbrennungsmotors (VM) betrieben wird.

12. Verfahren gemäß Anspruch 11, **dadurch gekennzeichnet, dass** die E-Fahrgeschwindigkeitsgrenze eine Zuschaltschwelle und eine Abschaltschwelle umfasst und die Zuschaltschwelle der Fahrgeschwindigkeitswert ist, bei dem bei zunehmender Fahrgeschwindigkeit das Umschalten von erstem Regelbereich in den zweiten Regelbereich erfolgt, und die Abschaltschwelle der Fahrgeschwindigkeitswert ist, bei dem bei abnehmender Fahrgeschwindigkeit das Umschalten von zweitem Regelbereich in den ersten Regelbereich, erfolgt.

13. Verfahren gemäß Anspruch 12, **dadurch gekennzeichnet, dass** die Zuschaltschwelle und die Abschaltschwelle in einem Bereich zwischen 5 und 25 km/h, vorzugsweise zwischen 10 und 15 km/h auseinanderliegen.

14. Verfahren gemäß einem der Ansprüche 11 bis 13, **dadurch gekennzeichnet, dass** der Verbrennungsmotor (VM) nur in einem Fahrleistungs-Sonderbetriebsmbdus kurzzeitig bei Lasten oberhalb des Bereichs optimalen Wirkungsgrades des Verbrennungsmotors (VM) betrieben wird.

15. Verfahren gemäß einem der Ansprüche 11 bis 14, **dadurch gekennzeichnet, dass** das Verfahren einen ersten Hybrid-Sonderbetriebsmodus, der in Abhängigkeit des Batterieladezustands den Hybrid-Normalbetriebsmodus ersetzt, umfasst, **dadurch gekennzeichnet, dass** der erste Hybrid-Sonderbetriebsmodus aktiviert wird, wenn der Batterieladezustand unterhalb eines ersten Grenzwertes fällt, und mit Aktivierung des ersten Hybrid-Sonderbetriebsmodus die E-Fahrgeschwindigkeitsgrenze auf einen niedrigeren als den ursprünglichen Wert gesetzt wird.

16. Verfahren gemäß einem der Ansprüche 11 bis 15, **dadurch gekennzeichnet, dass** das Verfahren einen zweiten Hybrid-Sonderbetriebsmodus, der in Abhängigkeit des Batterieladezustands den Hybrid-Normalbetriebsmodus ersetzt, umfasst, **dadurch gekennzeichnet, dass** der zweite Hybrid-Sonderbetriebsmodus aktiviert wird, wenn der - Batterieladezustand einen zweiten Grenzwert übersteigt, und mit Aktivierung des zweiten Hybrid-Sonderbetriebsmodus E-Fahrgeschwindigkeitsgrenze auf einen höheren als den ursprünglichen Wert gesetzt wird und/oder der Betrieb des Verbrennungsmotors (VM) auf eine Last unterhalb des Bereichs optimalen Wirkungsgrades des Verbrennungsmotors (VM) so eingeregelt wird, dass die Ladeleistung des Verbrennungsmotors (VM) gleich Null ist.

17. Verfahren gemäß einem der Ansprüche 15 oder 16, **dadurch gekennzeichnet, dass** der Übergang vom Hybrid-Normalmodus zum ersten Hybrid-Sonderbetriebsmodus und/oder zweiten Hybrid-Sonderbetriebsmodus kontinuierlich in Abhängigkeit des Batterieladezustands und vorzugsweise in Abhängigkeit von Vorausschau-Funktionen erfolgt und die E-Fahrgeschwindigkeitsgrenzen kontinuierlich abgesenkt oder angehoben werden.

18. Verfahren gemäß einem der Ansprüche 11 bis 17, **dadurch gekennzeichnet, dass** das Verfahren weiterhin einen optional vom Fahrer anwählbaren E-Fahrbetriebsmodus umfasst, in dem das Antriebsmoment des Kraftfahrzeugs im gesamten Geschwindigkeitsbereich nur mittels des Elektromotors (EM) erzeugt wird.

19. Verfahren gemäß einem der Ansprüche 11 bis 18, **dadurch gekennzeichnet, dass** der Verbrennungsmotor (VM) im zweiten Regelbereich auch in Schubphasen bei konstantem Betriebspunkt betrieben wird.

## Claims

1. A torque overlay device for use in a hybrid drive (1) for motor vehicles, especially for use in passenger motor vehicles,
wherein the hybrid drive (1) comprises an internal combustion engine (VM), an electric motor (EM) and the torque overlay device, and a torque of the internal combustion engine (VM) can be overlaid with a torque of the electric motor (EM) by means of the torque overlay device, and the torque overlay device is connected on the output side to an output (9) of the vehicle,
and the torque overlay device has a first and a second torque input (3, 4) and a torque output (5) and also a first transmission device (12) and a second transmission device (13), and the electric motor (EM) can be coupled in torque-resistant manner with the first torque input (3), and the internal combustion engine (VM) can be coupled in torque-resistant manner with the second torque input (4), wherein the first torque input (3) is connected in torque-resistant manner to the first transmission device (12), and the second torque input (4) is connected in torque-resistant manner to the second transmission device (13), and the transmission devices (12, 13) in each case are coupled on the output side with the torque output (5) of the torque overlay device in torque-resistant manner,
wherein both transmission devices (12, 13) comprise in each case at least two alternatively selectable transmission stages (EM1, EM2, VM3, VM4), wherein the first transmission device (12) comprises at least one planetary gear set (15) to represent the at least two alternatively selectable transmission stages (EM1, EM2),
and the second transmission device (13) comprises at least two spur gear sets (27, 28) to represent the at least two alternatively selectable transmission stages (VM3, VM4), and
wherein the planetary gear set (15) has a ring gear (20), planets (21), a planet carrier (22) and a sun (23),
**characterised in that**
- the first transmission device (12) has a spur gear set (14) which has a first spur gear (16) which is arranged by means of an interference fit on a first shaft (6) which couples the electric motor (EM) in torque-resistant manner with the first torque input (3), and a second spur gear (17) which is arranged by means of an interference fit on a cylindrical tail (19) of the ring gear (20),
- the sun (23) to represent a first transmission stage (EM1) can be braked in stationary manner with a housing of the torque overlay device by means of a powershift-capable friction brake (24), and
- the planetary gear set (15) to represent a second transmission stage (EM2) can be blocked by closing a clutch (26) between the ring gear (20) and the planet carrier (22).

2. A torque overlay device according to Claim 1, **characterised in that** the first transmission device (12) comprises precisely one planetary gear set (15), with preferably precisely two transmission stages (EM1, EM2) being alternatively selectable.

3. A torque overlay device according to one of the preceding claims, **characterised in that** the planetary gear set (15) for selecting the transmission stages (EM1, EM2) is embodied with at least the powershift-capable friction brake (24) and the clutch (26) in the form of a friction clutch (26).

4. A torque overlay device according to one of the preceding claims, **characterised in that** the second transmission device (13), in order to be able to select at least one of the at least two spur gear sets (27, 28) formed as transmission stages, comprises at least one positively locking and/or frictionally locking shift clutch (29).

5. A torque overlay device according to Claim 4, **characterised in that** the at least one shift clutch (29) is embodied with a synchronisation element.

6. A torque overlay device according to one of the preceding claims, **characterised in that** a fixed transmission means, namely the spur gear set (14) of the first transmission device (12), is arranged between the electric motor (EM) and the planetary gear set (15), and the fixed transmission means preferably has a gear ratio of between 1.5 and 4, especially preferably a gear ratio of between 1.5 and 3.

7. A torque overlay device according to Claim 6, **characterised in that** to represent one or two further alternatively selectable transmission stages (VM1, VM2) a shaft (7) of the second transmission device (13) which is connected to the second torque input (4) can be connected in alternatively selectable and torque-resistant manner to the first spur gear (16) of the fixed transmission means which is formed as a spur gear set (14).

8. A torque overlay device according to Claim 7, **characterised in that** the shaft (7) of the second transmission device (13) which is connected to the second torque input (4) and the first shaft (6) of the first transmission device (12) which is connected to the first torque input (3) are arranged aligned with each other, and that end of the shaft (7) of the second transmission device (13) which is connected to the second torque input (4), which end is remote from the second torque input (4), is mounted in an end, formed as a hollow shaft (18), of the first shaft (6) of the first transmission device (12) which is connected to the first torque input (3).

9. A torque overlay device according to one of Claims 7 or 8, **characterised in that** for the alternatively selectable torque-resistant connection of the shaft (7) which is connected to the second torque input (4) to the fixed transmission means (14), a positively locking and/or frictionally locking shift clutch (30) is arranged on the shaft (7) which is connected to the second torque input (4), and the shift clutch (30) is preferably embodied with a synchronisation element.

10. A hybrid drive (1) comprising an internal combustion engine (VM), an electric motor (EM) and a torque overlay device according to one of Claims 1 to 9, wherein the internal combustion engine (VM) has a power of between 40 and 150 kW, preferably a power of between 50 and 100 kW, and the electric motor (EM) has a continuous power of 30 to 60 kW and a peak power which corresponds to 2 to 3 times the continuous power.

11. A method for operating a hybrid drive of a motor vehicle, especially of a passenger motor vehicle,
wherein the hybrid drive comprises a torque overlay device according to one of the preceding claims, and the method comprises a hybrid normal operating mode with a first and a second control range,
wherein the first control range extends from a vehicle speed of zero up to an electric driving speed limit in the hybrid normal operating mode, and the second control range extends from the electric driving speed limit in the hybrid normal operating mode up to the maximum speed of the vehicle, **characterised in that**
in the first control range the driving torque of the motor vehicle is generated only by means of the electric motor (EM), with the sun (23) to represent the first transmission stage (EM1) being braked in stationary manner with the housing of the torque overlay device by means of the powershift-capable friction brake (24), or the planetary gear set (15) to represent the second transmission stage (EM2) being blocked by closing the clutch (26) between the ring gear (20) and the planet carrier (22),
in the second control range the driving torque of the motor vehicle is generated in hybrid operation by cooperation of the internal combustion engine (VM) and the electric motor (EM), wherein to represent a first transmission stage (VM1) and a second transmission stage (VM2) a second shaft (7) which couples the internal combustion engine (VM) in torque-resistant manner with the second torque input (4) is connected in torque-resistant manner to the first spur gear (16) by means of a positively locking dog clutch (30), and
the internal combustion engine (VM) is operated in the range of optimum efficiency of the internal combustion engine (VM) independently of the load requirement of the driver input.

12. A method according to Claim 11, **characterised in that** the electric driving speed limit comprises a cut-in threshold and a cut-off threshold, and the cut-in threshold is the driving speed value at which with increasing driving speed the switch from the first control range into the second control range takes place, and the cut-off threshold is the driving speed value at which with decreasing driving speed the switch from the second control range into the first control range takes place.

13. A method according to Claim 12, **characterised in that** the cut-in threshold and the cut-off threshold lie apart in a range between 5 and 25 km/h, preferably between 10 and 15 km/h.

14. A method according to one of Claims 11 to 13, **characterised in that** the internal combustion engine (VM) only in a driving-performance special operating mode is operated briefly at loads above the range of optimum efficiency of the internal combustion engine (VM).

15. A method according to one of Claims 11 to 14, **characterised in that** the method comprises a first hybrid special operating mode which replaces the hybrid normal operating mode as a function of the battery charging condition, **characterised in that** the first hybrid special operating mode is activated if the battery charging condition drops below a first limit value, and with activation of the first hybrid special operating mode the electric driving speed limit is set to a value lower than the original value.

16. A method according to one of Claims 11 to 15, **characterised in that** the method comprises a second hybrid special operating mode which replaces the hybrid normal operating mode as a function of the battery charging condition, **characterised in that** the second hybrid special operating mode is activated if the battery charging condition exceeds a second limit value, and with activation of the second hybrid special operating mode the electric driving speed limit is set to a value higher than the original value and/or the operation of the internal combustion engine (VM) is adjusted to a load below the range of optimum efficiency of the internal combustion engine (VM) such that the charging power of the internal combustion engine (VM) is equal to zero.

17. A method according to one of Claims 15 or 16, **characterised in that** the transition from the hybrid normal mode to the first hybrid special operating mode and/or second hybrid special operating mode takes place continuously as a function of the battery charging condition and preferably as a function of predictive functions, and the electric driving speed limits are continuously lowered or raised.

18. A method according to one of Claims 11 to 17, **characterised in that** the method furthermore comprises an electric driving operating mode optionally selectable by the driver, in which the driving torque of the motor vehicle in the entire speed range is generated only by means of the electric motor (EM).

19. A method according to one of Claims 11 to 18, **characterised in that** the internal combustion engine (VM) in the second control range is operated at a constant operating point even in coasting phases.

## Revendications

1. Installation de superposition de couples destinée à une motorisation hybride (1) de véhicule automobile notamment applicable à des véhicules de tourisme,
la motorisation hybride (1) se composant d'un moteur thermique (VM) d'un moteur électrique (EM) et d'une installation de superposition de couples, et à l'aide de l'installation de superposition de couples, le couple fourni par le moteur thermique (VM) est combiné au couple fourni par le moteur électrique (EM), la sortie de cette installation de superposition de couples étant reliée à la sortie d'entrainement (9) du véhicule, et l'installation de superposition de couples prend une première et une seconde entrée de couple (3, 4) et une sortie de couple (5) ainsi qu'une première installation de démultiplication (12) et une seconde installation démultiplication (13) et le moteur électrique (EM) est couplé de manière solidaire en transmission de couple avec la première entrée de couple (3) et le moteur thermique (VM) est couplé de manière solidaire en transmission de couple avec la seconde entrée de couple (4),
la première entrée de couple (3) étant reliée solidairement en transmission de couple à la première installation de démultiplication (12) et la seconde entrée de couple (4) est reliée solidairement en transmission de couple à la seconde installation de démultiplication (13) et les installations de démultiplications (12, 13) sont couplées respectivement, côté sortie, à la sortie de couple (5) de l'installation de superposition de couples solidairement en transmission du couple,
les deux installations de démultiplication (12, 13) comportant respectivement au moins deux étages de démultiplication (EM1, EM2, VM3, VM4) et qui peuvent être sélectionnés alternativement,
la première installation de démultiplication (12) comporte au moins un jeu de pignons planétaires (15) pour constituer au moins deux étages de démultiplications (EM1, EM2) qui peuvent être sélectionné en alternance, et
la seconde installation de démultiplication (13) comporte au moins deux étages de démultiplication (VM3, VM4) qui peuvent être sélectionnés alternativement, ayant au moins deux jeux de pignons droits (27, 28), et le jeu de pignons planétaires (15) comprend une roue à denture intérieure (20), des pignons planétaires (21), un porte-satellite (22) et un pignon solaire (23),
installation **caractérisée en ce que**
- la première installation de démultiplication (12) comprend un jeu de pignons droits (14) avec un premier pignon droit (16) installé avec un siège fixe sur un premier arbre (6) qui peut être couplé à la première entrée de couple (3) d'une manière solidaire en rotation pour le moteur électrique (EM) et un second pignon droit (17) installé avec un siège fixe sur la sortie cylindrique (19) de la roue à denture intérieure (20),
- la roue solaire (23) pour constituer un premier étage de démultiplication (EM1) pouvant être freinée de manière fixe à l'aide d'un frein à friction (24) commutable en charge avec le boîtier de l'installation de superposition de couples, et
- le jeu de pignons planétaires (15) pour constituer un second étage de démultiplication (EM2) pouvant être bloqué par la fermeture d'un embrayage (26) entre la roue à denture intérieure (20) et le porte-satellite planétaire (22).

2. Installation de superposition de couples selon la revendication 1,
**caractérisée en ce que**
la première installation de démultiplication (12) comporte précisément un jeu de pignons planétaires (15) et de préférence précisément deux étages de démultiplication (EM1, EM2) peuvent être sélectionnés en alternance.

3. Installation de superposition de couples selon l'une des revendications précédentes,
**caractérisée en ce que**
le jeu de pignons planétaires (15) est réalisé pour la sélection des étages de démultiplication (EM1, EM2) avec au moins un frein à friction (24) commutant la charge et l'embrayage (26) et réalisé sous la forme d'un embrayage à friction (26).

4. Installation de superposition de couples selon l'une des revendications précédentes,
**caractérisée en ce que**
la seconde installation de démultiplication (13) pour pouvoir sélectionner au moins l'un des deux étages de démultiplication est réalisée sous la forme d'un jeu de pignons droits (27, 28) au moins sous la forme d'un embrayage de commutation (29) qui se ferme par une liaison par la forme et/ou par frottement.

5. Installation de superposition de couples selon la revendication 4,
**caractérisée en ce qu'**
au moins un embrayage de commutation (29) est réalisé avec un élément de synchronisation.

6. Installation de superposition de couples selon l'une des revendications précédentes,
**caractérisée par**
une démultiplication fixe à savoir le jeu de pignons droits (14) de la première installation de démultiplication (12) entre le moteur électrique (EM) et le jeu de pignons planétaire (15), et
la démultiplication fixe a de préférence un rapport de démultiplication compris entre 1, 5 et 4 et en particulier de manière préférentielle un rapport de démultiplication entre 1,5 et 3.

7. Installation de superposition de couples selon la revendication 6,
**caractérisée en ce que**
pour former un ou deux étages de démultiplication (VM1, VM2) qui peuvent être sélectionnés en alternance, on peut relier un arbre (7) relié à la seconde entrée de couple (4) de la seconde installation de démultiplication (13) au premier pignon droit (16) de la démultiplication fixe réalisée comme pignon droit (14), pour être relié en alternance de façon solidaire en couple.

8. Installation de superposition de couples selon la revendication 7,
**caractérisée en ce que**
l'arbre (7) relié à la seconde entrée de couple (4) de la seconde installation de démultiplication (13) et le premier arbre (6) relié à la première entrée de couple (3) de la première installation de démultiplication (12) sont alignés, et
l'extrémité opposée à la seconde entrée de couple (4) de l'arbre (7) de la seconde installation de démultiplication (13) relié à la seconde entrée de couple (4) est montée dans une extrémité en forme d'arbre creux (18) du premier arbre (6) de la première installation de démultiplication (12), cet arbre étant relié à la première entrée de couple (3).

9. Installation de superposition de couples selon l'une des revendications 7 ou 8,
**caractérisée en ce qu'**
en variante de la liaison solidaire en couple, que l'on peut sélectionner en variante, de l'arbre (7) relié à la seconde entrée de couple (4), avec la démultiplication fixe (14), un embrayage de commutation (30) par la forme et/ou par friction est monté sur l'arbre (7) relié à la seconde entrée de couple et l'embrayage de commutation (30) est de préférence réalisé avec un élément de synchronisation.

10. Motorisation hybride (1) comprenant un moteur thermique (VM), un moteur électrique (EM) et une installation de superposition de couples selon l'une des revendications 1 à 9,
le moteur thermique (VM) ayant une puissance comprise 40 et 150 kW de préférence une puissance comprise entre 50 et 100 kW et le moteur électrique (EM), une puissance continue de 30-60 KW et une puissance maximale qui correspond à plus de 2-3 fois la puissance permanente.

11. Procédé de gestion d'une motorisation hybride d'un véhicule notamment d'un véhicule de tourisme, selon lequel la motorisation hybride a une installation de superposition de couples selon l'une des revendications précédentes et le procédé a un mode de fonctionnement normal hybride avec une première et une seconde plage de régulation, la première plage de régulation s'étendant entre la vitesse nulle du véhicule jusqu'à la limite de vitesse de circulation électrique en mode hybride normal et la seconde plage de régulation s'étend à partir de la limite de vitesse de circulation en mode électrique, en mode normal de fonctionnement, jusqu'à la vitesse maximale du véhicule,
**caractérisée en ce que**
dans la première plage de régulation, le couple moteur du véhicule est généré uniquement par le moteur électrique (EM), le pignon solaire (23) pour former le premier étage de démultiplication (EM1) étant freiné de manière fixe à l'aide du frein à friction (24) pouvant commuter en charge avec le boîtier de l'installation de superposition de couples, ou encore le jeu de pignons planétaires (15) pour former le second étage de démultiplication (EM2) est bloqué par la fermeture de l'embrayage (26) entre la roue à denture intérieure (20) et le porte-pignons planétaires (22),
dans la seconde plage de régulation le couple moteur du véhicule en mode hybride, est généré par la coopération du moteur thermique (VM) et du moteur électrique (EM), et pour former un premier étage de démultiplication (VM1) et un second étage de démultiplication (VM2) on relie un second arbre (7) en couplant le moteur thermique (VM) de manière solidaire en couple avec la seconde entrée de couple (4), à l'embrayage à griffes (30) à liaison par la forme, de manière solidaire en rotation avec le premier pignon droit (16), et
le moteur thermique (VM) fonctionne selon la demande de charge du souhait du conducteur dans la plage de rendement optimum du moteur thermique (VM).

12. Procédé selon la revendication 11,
**caractérisé en ce que**
la limite de vitesse de circulation en mode électrique est le seuil de commutation de branchement et le seuil de coupure, le seuil de commutation en branchement étant la vitesse de circulation à laquelle pour une vitesse de circulation croissante, on commute de la première plage de régulation dans la seconde plage de régulation et le seuil de commutation de coupure étant la vitesse de circulation à laquelle pour une vitesse de circulation décroissante, on commute de la première plage de régulation dans la seconde plage de régulation.

13. Procédé selon la revendication 12,
**caractérisé en ce que**
le seuil de commutation dans le sens de la fermeture et le seuil de coupure sont écartés dans une plage comprise entre 5 et 25 km/h et de préférence entre 10 et 15 km/h.

14. Procédé selon l'une des revendications 11 à 13,
**caractérisé en ce que**
le moteur thermique (VM) ne fonctionne en mode particulier de puissance de conduite seulement brièvement pour des charges supérieures à la plage du rendement optimum du moteur thermique (VM).

15. Procédé selon l'une des revendications 11 à 14,
**caractérisé en ce que**
dans un premier mode de fonctionnement spécial hybride qui remplace le mode de fonctionne normal hybride en fonction de l'état de batterie, le procédé est **caractérisé en ce que** le premier mode de fonctionnement particulier hybride est activé lorsque l'état de charge de la batterie est inférieur à une première valeur limite et par l'activation du premier mode de fonctionnement particulier hybride, la limite de vitesse de circulation en mode électrique E est fixé à un niveau moindre que la valeur d'origine.

16. Procédé selon l'une des revendications 11 à 15,
**caractérisé en ce que**
le procédé a un second mode de fonctionnement particulier hybride qui, en fonction de l'état de charge de la batterie, remplace le mode de fonctionnement hybride normal, **caractérisé en ce qu'**on active le second mode de fonctionnement particulier hybride si l'état de charge des batteries dépasse une seconde valeur limite et en activant le second mode de fonctionnement hybride, on met le seuil de la vitesse de circulation en mode électrique à une valeur supérieure à la valeur initiale et/ou on régule le fonctionnement du moteur thermique (VM) sur une charge inférieure à la plage du rendement optimum du moteur thermique (VM) en régulant pour que la puissance de charge du moteur thermique (VM) soit nulle.

17. Procédé selon l'une des revendications 15 ou 16,
**caractérisé en ce que**
le passage du mode normal hybride au premier mode spécial hybride et/ou au second mode spécial se fait en continu, en fonction du niveau de charge de la batterie et de préférence selon des fonctions prévisionnelles et les vitesses de circulation en mode E sont abaissées en continu ou sont relevées en continu.

18. Procédé selon l'une des revendications 11 à 17,
**caractérisé en ce que**
le procédé comprend en outre un mode de fonctionnement en conduite électrique que le conducteur peut sélectionner en option et selon lequel le couple moteur du véhicule automobile n'est généré que par le moteur électrique (EM) dans l'ensemble de la plage de vitesse.

19. Procédé selon l'une des revendications 11 à 18,
**caractérisé en ce que**
le moteur thermique (VM) fonctionne dans une seconde plage de régulation également en phase de poussée pour un point de fonctionnement constant.
